# EUROPÄISCHE PATENTSCHRIFT

(11) **EP 4 628 832 B1**
(45) Veröffentlichungstag und Bekanntmachung des Hinweises auf die Patenterteilung: **02.12.2026**
(21) Anmeldenummer: 24168234.3
(22) Anmeldetag: 03.04.2024
(51) Int. Cl.: G01B 5/012

(54) **MESSTASTER**
MEASURING PROBE
PALPEUR DE MESURE

(43) Veröffentlichungstag der Anmeldung: 08.10.2025
(73) Patentinhaber: Numerik Jena GmbH, 07751 Jena (DE)
(72) Erfinder: RIEDEL, Denis, 07747 Jena (DE); WEISE, Jörg, 99085 Erfurt (DE); SULIK, Reinhard, 07747 Jena (DE)
(74) Vertreter: Hofmann, Ernst

(56) Entgegenhaltungen:
- EP-B1- 0 517 653
- US-A- 4 616 420

## Beschreibung

### GEBIET DER TECHNIK

Die vorliegende Erfindung betrifft einen Messtaster nach dem Oberbegriff des Anspruchs 1.

### STAND DER TECHNIK

Messtaster sind typischerweise berührende Wegaufnehmer, die ein dem Messweg proportionales elektrisches Signal liefern, das von nachgeschalteten elektronischen Auswertegeräten weiterverarbeitet werden kann. Solche Messtaster werden insbesondere in der Fertigungsmesstechnik eingesetzt, um vielfältige Aufgaben im Rahmen der Qualitätssicherung wahrzunehmen.

Aus dem Stand der Technik sind Messtaster bekannt, die nach dem Abbe'schen Messprinzip arbeiten. Solche Messtaster besitzen in der Regel einen länglichen Grundkörper, in dem ein Messbolzen angeordnet ist, wobei sich an dessen freien Ende ein Tastelement befindet. Der Messbolzen wird durch eine Führung axial zum Grundkörper geführt und ist zusätzlich durch einen Faltenbalg zwischen der Führung und dem Tastelement vor Verschmutzung geschützt. Die Führung des Messbolzens wird bei derartigen Messtastern während der Fertigung in eine Durchgangsbohrung des Grundkörpers eingesetzt und beispielsweise mit dem Grundkörper verklebt. Der Durchmesser der Durchgangsbohrung sollte dabei ausreichend groß gewählt werden, damit der Klebstoff seine adhäsiven und kohäsiven Eigenschaften im benötigten Umfang ausbilden kann. Dies führt jedoch dazu, dass die Führung innerhalb der Bohrung einem gewissen Spiel ausgesetzt ist, bis der Klebstoff vollständig ausgehärtet ist. Die Folge ist eine erhöhte Ausschussrate, da die Achse der Führung nach dem Aushärten des Klebstoffs vereinzelt nicht mehr parallel zur Achse der Bohrung ausgerichtet ist.

Alternativ kann die Führung auch durch eine Presspassung in die Bohrung des Grundkörpers gefügt werden, sodass die Achse der Führung zur Bohrungsachse des Grundkörpers ausgerichtet ist. In der Praxis hat sich jedoch gezeigt, dass diese Maßnahme nachteilig ist, da Messtaster häufig einer Umgebung mit hohen Vibrationen und Schockbelastungen ausgesetzt sind, wodurch es mittel- und langfristig zum Lösen der Presspassung zwischen Führung und Grundkörper kommen kann.

US 4,616,420 A beschreibt einen Messtaster mit einem ersten hohlen zylindrischen Bauelement und einem zweiten zylindrischen Bauelement, das sich in die runde zylindrische Bohrung des ersten Bauelements erstreckt und mit dem ersten Bauelement durch Klebstoff gekoppelt ist.

### ZUSAMMENFASSUNG DER ERFINDUNG

Aufgabe der vorliegenden Erfindung ist es daher, einen verbesserten Messtaster zu schaffen, der einen einfachen Aufbau hat und mit dem ein zuverlässigeres Verbinden der Einzelteile erzielt wird.

Diese Aufgabe wird erfindungsgemäß durch die Merkmale des Anspruchs 1 gelöst. Vorteilhafte Ausgestaltungen und Weiterbildungen sind in den jeweils abhängigen Ansprüchen angegeben.

Der erfindungsgemäße Messtaster umfasst ein erstes Bauelement und ein zweites Bauelement. Das erste Bauelement umfasst eine unrunde Bohrung mit einer ersten Achse. Das zweite Bauelement ist zylindrisch ausgebildet und weist eine zweite Achse auf. Das zweite Bauelement erstreckt sich axial in die unrunde Bohrung des ersten Bauelements. Die unrunde Bohrung ist derart ausgebildet, dass das zweite Bauelement über wenigstens zwei Kontaktflächen des ersten Bauelements innerhalb der unrunden Bohrung achsparallel zur ersten Achse der unrunden Bohrung fügbar ist. Das erste Bauelement weist innerhalb der unrunden Bohrung eine Nut auf, welche in einer Umfangsrichtung der unrunden Bohrung verläuft. Der Messtaster weist wenigstens einen Klemmkörper auf, welcher durch die Nut aufnehmbar ist. Durch eine Rotation des zweiten Bauelements relativ zum ersten Bauelement wird mit Hilfe des durch die Nut aufgenommenen Klemmkörpers eine lösbare Fixierung des zweiten Bauelements zumindest an den Kontaktflächen des ersten Bauelements erreicht. Dabei wird die zweite Achse des zweiten Bauelements parallel zur ersten Achse der unrunden Bohrung ausgerichtet.

Gemäß einer vorteilhaften Weiterbildung der Erfindung umfasst die Nut zumindest einen ersten Abschnitt, welcher sich in der Umfangsrichtung radial bezüglich der ersten Achse verjüngt. Die Nut umfasst zusätzlich einen weiteren Abschnitt, welcher radial bezüglich der ersten Achse geweitet ist, sodass der Klemmkörper gerade noch oder alternativ nicht in Eingriff mit dem ersten und zweiten Bauelement steht.

In weiterer Ausgestaltung sind der Klemmkörper und die Nut derart ausgebildet, dass der Klemmkörper durch eine Rotation des zweiten Bauelements relativ zum ersten Bauelement innerhalb der Nut geführt wird. Durch die Rotation in einer ersten Richtung wird durch den Klemmkörper eine Klemmung bzw. Arretierung zwischen dem ersten und zweiten Bauelement im ersten Abschnitt hervorgerufen. Der Klemmkörper wird durch die Rotation in der ersten Richtung vom weiteren Abschnitt in den ersten Abschnitt gebracht. Die Klemmung kann anschließend wieder gelöst werden, indem der Klemmkörper vom ersten Abschnitt in den weiteren Abschnitt gebracht wird. Dies geschieht durch eine Rotation des zweiten Bauelements relativ zum ersten Bauelement in einer der ersten Richtung entgegengesetzten zweiten Richtung.

Mit Vorteil sind die Kontaktflächen derart ausgebildet, dass zwischen dem ersten und zweiten Bauelement wenigstens ein erster und ein zweiter Spalt ausgebildet werden. Die Spalte sind zur ausreichenden Aufnahme eines Mittels zum Ausbilden einer stoffschlüssigen Verbindung zwischen dem ersten und zweiten Bauelement ausgebildet.

Vorzugsweise erstrecken sich die Kontaktflächen in axialer Richtung entlang der gesamten Tiefe der unrunden Bohrung.

In weiterer Ausgestaltung ist der Querschnitt der unrunden Bohrung spiegelsymmetrisch ausgebildet. Die Kontaktflächen sind jeweils in Form eines Sekantenabschnitts ausgebildet, wobei der Querschnitt der unrunden Bohrung sonst als Kontur mit einem konstanten Radius bezüglich der ersten Achse verläuft.

Der Querschnitt der unrunden Bohrung setzt sich somit zusammen aus einer teilweise rund verlaufenden Kreiskontur mit konstantem Radius, welche durch zwei Sekanten teilweise unrund wird.

Vorzugsweise ist innerhalb der unrunden Bohrung ein Überlappungsbereich des ersten und zweiten Bauelements in axialer Richtung kleiner als der zweieinhalbfache oder alternativ einfache Durchmesser des zweiten Bauelements.

Mit Vorteil ist der Klemmkörper ein Kreiskeil oder ein Rotationskörper, insbesondere in Form einer Kugel oder eines Zylinders.

Vorzugsweise sind die Nut und die Kontaktflächen derart angeordnet, dass diese sich innerhalb der unrunden Bohrung in radialer Richtung bezüglich der ersten Achse gegenüber liegen.

Unter einem radialen Gegenüberliegen ist zu verstehen, dass die Nut in einer Hälfte der unrunden Bohrung angeordnet ist und die Kontaktflächen in der anderen Hälfte der unrunden Bohrung.

Ferner ist es vorteilhaft, wenn die Kontaktflächen jeweils einen betragsmäßigen Winkelabstand von 110° bis 140° zum ersten Abschnitt aufweisen.

Für die Kontaktflächen ist hierbei der Auftreffpunkt bzw. die Auftreffgerade maßgeblich, an dem bzw. an der die zylindrische Mantelfläche des zweiten Bauelements auf die Oberfläche der Kontaktflächen trifft.

Mit Vorteil weisen der erste Abschnitt und die Kontaktflächen jeweils einen betragsmäßigen Winkelabstand von 120° zueinander auf.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert.

### KURZE BESCHREIBUNG DER ZEICHNUNGEN

Es zeigt
- Fig. 1: eine perspektivische Ansicht eines Messtasters,
- Fig. 2: einen Längsschnitt durch die gefügten ersten und zweiten Bauelemente,
- Fig. 3: eine Detaildarstellung des Längsschnitts aus Fig. 2,
- Fig. 4: einen Querschnitt durch ein Ausführungsbeispiel mit gefügten ersten und zweiten Bauelementen im Bereich der Nut, wobei sich der Klemmkörper im weiteren Abschnitt befindet,
- Fig. 5: einen Querschnitt durch ein Ausführungsbeispiel mit gefügten ersten und zweiten Bauelementen im Bereich der Nut, wobei sich der Klemmkörper im ersten Abschnitt befindet,
- Fig. 6: eine schematische Darstellung der Winkelpositionen eines optimalen Keilpunkts und der Kontaktflächen, gemäß dem Ausführungsbeispiel aus Fig. 4.

### BESCHREIBUNG DER AUSFÜHRUNGSFORMEN

Eine Ausführungsform der vorliegenden Erfindung wird im Folgenden unter Bezugnahme der Zeichnungen genauer beschrieben.

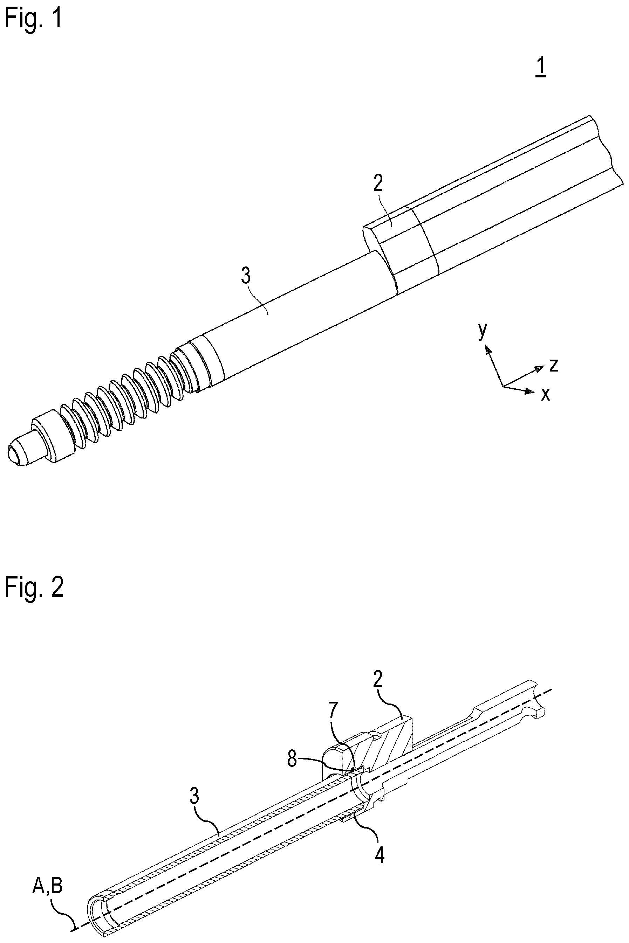

Fig. 1 zeigt in perspektivischer Darstellung einen Messtaster 1 mit einem ersten Gehäuseelement 2 und einem zweiten Gehäuseelement 3. Innerhalb des als Hohlwelle ausgebildeten zweiten Gehäuseelements 3 wird ein Messbolzen geführt, an dessen Ende ein Tastelement angebracht ist. Der Messbolzen wird zwischen dem zweiten Gehäuseelement 3 und dem Tastelement durch einen Faltenbalg vor äußerer Verschmutzung geschützt.

Wie Fig. 2 entnommen werden kann, umfasst das erste Bauelement 2 eine unrunde Bohrung 4, welche sich teilweise in das erste Bauelement 2 erstreckt. Die unrunde Bohrung 4 besitzt eine erste Achse A, welche durch das Zentrum der unrunden Bohrung 4 führt.

Das zweite Bauelement 3 ist an seiner Außenseite zylindrisch ausgebildet und besitzt eine zweite Achse B. Das zweite Bauelement 3 erstreckt sich teilweise in die unrunde Bohrung 4 des ersten Bauelements 2, sodass die erste Achse A der unrunden Bohrung 4 und die zweite Achse B des zweiten Bauelements 3 parallel und insbesondere koaxial sind.

Innerhalb der unrunden Bohrung 4 befindet sich eine Nut 7, welche als Aufnahme für einen Klemmkörper 8 dient. Die Nut 7 erstreckt sich dabei in radialer Richtung bezüglich der Achse A und innerhalb der Mantelfläche der unrunden Bohrung 4 in einer Umfangsrichtung U.

Als Klemmkörper 8 dient im gezeigten Ausführungsbeispiel eine Kugel, jedoch sind auch andere geometrische Körper zum Ausbilden eines Reibschlusses zwischen dem ersten und zweiten Bauelement 2, 3 geeignet, beispielsweise in Form eines Zylinders oder eines Kreiskeils.

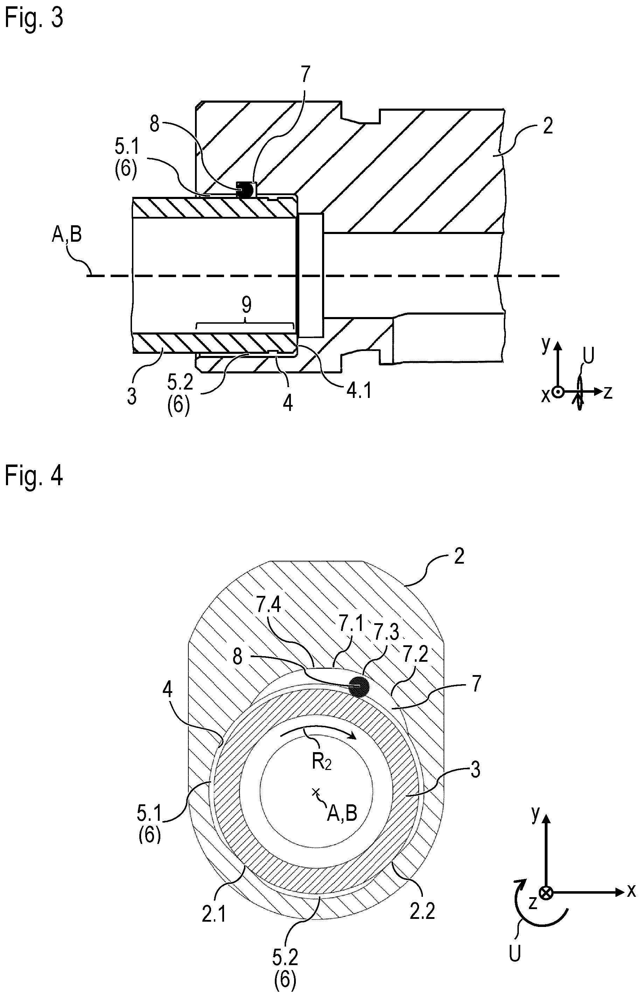

Wie Fig. 3 entnommen werden kann, ist die unrunde Bohrung 4 derart ausgebildet, dass im ungeklemmten Zustand zwischen dem ersten und zweiten Bauelement 2, 3 eine Spielpassung vorliegt. Dabei ist es vorteilhaft, wenn nach dem Ausbilden eines Reibschlusses zwischen dem ersten und zweiten Bauelement 2, 3 durch den Klemmkörper 8 wenigstens ein erster Spalt 5.1 und ein zweiter Spalt 5.2 zwischen dem ersten und zweiten Bauelement 2, 3 ausgebildet wird. Die beiden Spalte 5.1, 5.2 sollten in radialer Richtung bezüglich der Achse A derart breit sein, dass ein Stoffschlussmittel 6, beispielsweise ein Klebstoff, optimal seine adhäsiven und kohäsiven Eigenschaften ausbilden kann. Im gezeigten Ausführungsbeispiel haben der erste Spalt 5.1 und der zweite Spalt 5.2 jeweils eine Breite von zirka 50 µm, wobei Fig. 3 nicht maßstäblich gezeichnet ist.

Die unrunde Bohrung 4 erstreckt sich im gezeigten Ausführungsbeispiel in Fig. 3 nicht durch das gesamte erste Bauelement 2, sodass eine Auflagefläche 4.1 ausgebildet ist. Bei der Fertigung des Messtasters 1 wird das zweite Bauelement 3 in die unrunde Bohrung 4 des ersten Bauelements 2 gesteckt, bis die Grundfläche des zweiten Bauelements 3 in Kontakt mit der Auflagefläche 4.1 kommt, wobei ein Überlappungsbereich 9 zwischen dem ersten und zweiten Bauelement 2, 3 ausgebildet ist.

Der Überlappungsbereich 9, welcher sich in der axialen Richtung (z-Richtung) erstreckt, kann beim Messtaster 1 insbesondere kürzer als der 2,5-fache Durchmesser des zweiten Bauelements 3 sein. Wie in Fig. 3 gezeigt, kann der Überlappungsbereich 9 sogar kürzer als der einfache Durchmesser des zweiten Bauelements 3 sein. Durch den nachfolgend noch detaillierter beschriebenen Klemmmechanismus ist auch bei einer derart kurzen Fügelänge zwischen dem ersten und zweiten Bauelement 2, 3 ein zuverlässiges und achsparalleles Verbinden möglich.

Die Nut 7 ist innerhalb der unrunden Bohrung 4 angeordnet, sodass diese sich im Überlappungsbereich 9 befindet. Es ist zudem von Vorteil, wenn sich die Nut 7 bezüglich der z-Richtung zentriert im Überlappungsbereich 9 befindet. Die Anpresskraft, welche durch die selbsthemmende Verbindung zwischen dem Klemmkörper 8 und dem ersten und zweiten Bauelement 2, 3 ausgebildet wird, kann hierdurch optimal auf das zweite Bauelement 3 einwirken, wodurch das zweite Bauelement 3 an die Kontaktflächen 2.1, 2.2 gedrückt wird. Die Kontaktflächen 2.1, 2.2 erstrecken sich in z-Richtung zumindest über den Überlappungsbereich 9, vorteilhafterweise sogar entlang der gesamten Bohrungstiefe der unrunden Bohrung 4.

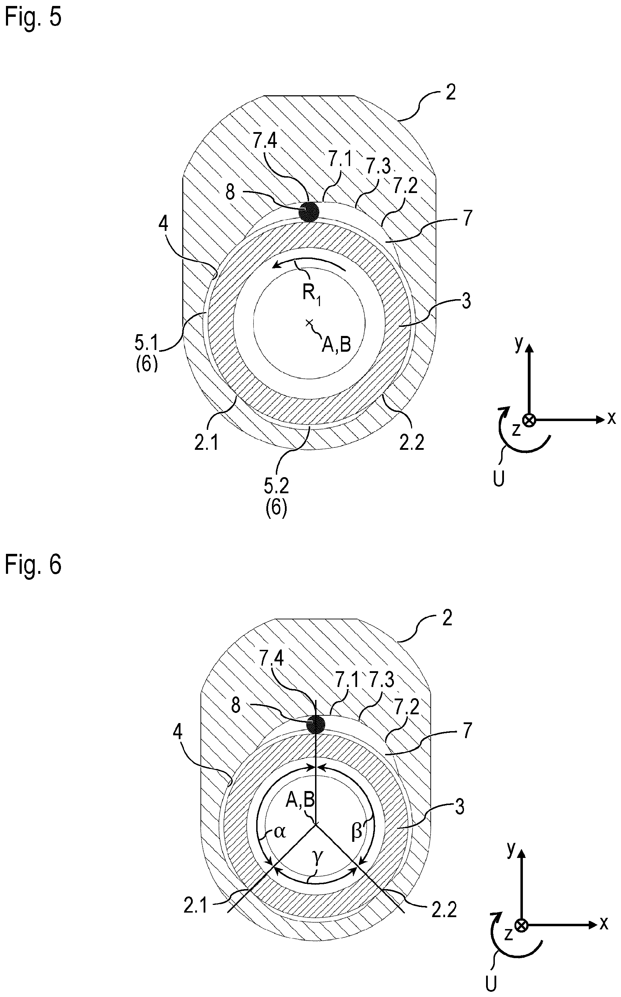

Wie Fig. 4 und Fig. 5 entnommen werden kann, erstreckt sich die Nut 7 über einen definierten Sektor der unrunden Bohrung 4. Gemäß dem Ausführungsbeispiel in Fig. 4 und Fig. 5 besitzt die Nut 7 in der Umfangsrichtung U eine sich ändernde Krümmung, wodurch die Nut 7 asymmetrisch bezüglich einer radial zur ersten Achse A verlaufenden Symmetrieebene ausgebildet ist. Die Nut 7 lässt sich unterteilen in einen ersten Abschnitt 7.1, welcher sich bezüglich der Umfangsrichtung U radial bezüglich der Achse A verjüngt und in einen weiteren Abschnitt 7.3, welcher radial geweitet ist.

Die Nut 7 verjüngt sich im ersten Abschnitt 7.1 stetig über die gesamte Länge des ersten Abschnitts 7.1 und läuft schließlich in die unrunde Bohrung 4 aus. D. h. die Nut 7 endet, sobald ihr Radius mit dem Radius der unrunden Bohrung 4 übereinstimmt. Vorzugsweise wird der Verjüngungswinkel so gewählt, dass er kleinergleich dem Arkustangens der Gleitreibungszahl ist.

Der weitere Abschnitt 7.3 ist radial geweitet ausgebildet, sodass der Klemmkörper 8 gerade noch in Eingriff mit dem ersten und zweiten Bauelement 2, 3 steht, d. h. im weiteren Abschnitt 7.3 ist der Radius der Nut 7 gleich dem Radius der unrunden Bohrung 4 plus dem Durchmesser des Klemmkörpers 8. Alternativ kann der weitere Abschnitt 7.3 jedoch radial so groß ausgebildet sein, dass der Klemmkörper 8 vollständig aufgenommen wird, d. h. im weiteren Abschnitt 7.3 ist der Radius der Nut 7 größer als der Radius der unrunden Bohrung 4 plus dem Durchmesser des Klemmkörpers 8. Die zu fügenden Bauelemente 2, 3 können in diesem Fall beim Verdrehvorgang so ausgerichtet werden, dass der Klemmkörper 8 durch sein Eigengewicht in den ersten Abschnitt 7.1 der Nut 7 gelangt und durch die Reibkräfte "mitgenommen" wird.

Gemäß dem gezeigten Ausführungsbeispiel grenzt an den weiteren Abschnitt 7.3 in der Umfangsrichtung U gegenüberliegend zu dem ersten Abschnitt 7.1 ein zweiter Abschnitt 7.2 an. Der zweite Abschnitt 7.2 verjüngt sich ebenfalls radial bezüglich der ersten Achse A, jedoch ist der zweite Abschnitt 7.2 in der Umfangsrichtung U kürzer ausgebildet als der erste Abschnitt 7.1. Der zweite Abschnitt 7.2 sorgt dafür, dass der Klemmkörper 8 keine Klemmung mit dem ersten und zweiten Bauelement 2, 3 ausbildet, wenn sich der Klemmkörper 8 im weiteren Abschnitt 7.3 befindet und eine fortlaufende Rotation des zweiten Bauelements 3 relativ zum ersten Bauelement 2 in der zweiten Richtung R₂ erfolgt.

Alternativ kann jedoch statt dem zweiten Abschnitt 7.2 ein zusätzlicher erster Abschnitt 7.1 ausgebildet sein.

Die unrunde Bohrung 4 besitzt einen weitestgehend runden symmetrischen Querschnitt mit einem ersten Sekantenabschnitt, welcher die erste Kontaktfläche 2.1 ausbildet und einem zweiten Sekantenabschnitt, welcher die zweite Kontaktfläche 2.2 ausbildet. Die Symmetrielinie verläuft folglich in der Mitte zwischen dem ersten und zweiten Sekantenabschnitt und durch die Achse A.

Der Querschnitt der unrunden Bohrung 4 umfasst zwischen dem ersten und zweiten Sekantenabschnitt eine Kontur mit konstantem Radius. Die erste Achse A bildet den Mittelpunkt der unrunden Bohrung 4, auf die sich der zuvor genannte konstante Radius bezieht.

Vorteilhafterweise gehen die beiden Sekantenabschnitte an ihren distalen Enden fließend in die kreisförmige Kontur über, sodass es zu keiner Kantenbildung kommt.

Die Kontaktflächen 2.1, 2.2 müssen jedoch nicht eben ausgebildet sein, sondern können alternativ auch gekrümmt sein und ergänzend oder alternativ eine Oberflächenstruktur aufweisen.

Wie Fig. 6 entnommen werden kann, befinden sich die Kontaktflächen 2.1, 2.2 gegenüber der Nut 7. Vorteilhafterweise erfolgt die Anordnung der ersten Kontaktfläche 2.1 in einem Winkelabstand von α = -110° bis -140° zum ersten Abschnitt 7.1 und insbesondere zum Keilpunkt 7.4. Die Anordnung der zweiten Kontaktfläche 2.2 erfolgt dann vorteilhafterweise in einem Winkelabstand von β = +110° bis +140° zum ersten Abschnitt 7.1 und insbesondere zum Keilpunkt 7.4. Zwischen der ersten und zweiten Kontaktfläche 2.1, 2.2 besteht folglich ein betragsmäßiger Winkelabstand von γ = 80° bis 140°. Maßgeblich ist hierbei der Auftreffpunkt, an dem sich die zylindrische Mantelfläche des zweiten Bauelements 3 und die Oberfläche der Kontaktflächen 2.1, 2.2 berühren. In der Regel ist dies jener Punkt auf einer Kontaktfläche 2.1, 2.2, an dem der Abstand des Mittelpunkts der unrunden Bohrung 4 zur Oberfläche der Kontaktflächen 2.1, 2.2 am geringsten ist.

Besonders vorteilhaft ist es, wenn die Kontaktflächen 2.1, 2.2 untereinander einen Winkelabstand von 120° aufweisen und gleichzeitig einen Winkelabstand von 120° zum ersten Abschnitt 7.1 und insbesondere zum Keilpunkt 7.4 aufweisen, d. h. die beiden Kontaktflächen 2.1, 2.2 und der erste Abschnitt 7.1 bzw. der Keilpunkt 7.4 sind über den Winkelumfang von 360° gleichverteilt (α = β = γ = 120°). Auf diese Weise wird das zylindrische zweite Bauelement 3 optimal gelagert und dessen zentrierte Ausrichtung gewährleistet.

Im Folgenden wird unter Bezugnahme auf die Fig. 4 und Fig. 5 auf die Vorgehensweise bzw. das Verfahren zum Fügen des ersten und zweiten Bauelements 2,3 und dem Ausbilden der arretierten und achsparallelen Verbindung zwischen dem ersten und zweiten Bauelement 2, 3 durch den Klemmkörper 8 eingegangen.

Zunächst werden hierzu das erste Bauelement 2, das zweite Bauelement 3 und der Klemmkörper 8 bereitgestellt. Das erste Bauelement 2 umfasst die unrunde Bohrung 4 mit der Nut 7. Das zweite Bauelement 3 ist als Hohlwelle mit einer Mantelfläche und einer kreisringförmigen Grundfläche an dessen Stirnseiten ausgebildet. Der Klemmkörper 8 ist als Kugel ausgebildet.

Zunächst wird der Klemmkörper 8 in der Nut 7 angeordnet. Vorzugsweise erfolgt die Anordnung des Klemmkörpers 8 im Bereich des weiteren Abschnitts 7.3 der Nut 7.

Anschließend erfolgt das Einpassen des zweiten Bauelements 3 in das erste Bauelement 2. Hierbei wird das zweite Bauelement 3 axial in die unrunde Bohrung 4 des ersten Bauelements 2 gesteckt, bis die Grundfläche des zweiten Bauelementes 3 die Auflagefläche 4.1 des ersten Bauelements 2 berührt und der Überlappungsbereich 9 ausgebildet ist. Während des Einsteckvorgangs kann das zweite Bauelement 3 relativ zum ersten Bauelement 2 in der zweiten Richtung R₂ um die zweite Achse B gedreht werden (siehe Fig. 4). Dies hat den positiven Effekt, dass der Klemmkörper 8 während des Einsteckvorgangs nicht versehentlich in den ersten Abschnitt 7.1 der Nut 7 gelangt bzw. aus diesem herausbewegt wird, sollte der Klemmkörper 8 doch dorthin gelangt sein.

Nachdem die beiden Bauelemente 2, 3 auf Anschlag zusammengesteckt wurden, wird das zweite Bauelement 3 relativ zum ersten Bauelement 2 in die erste Richtung R₁ gedreht (siehe Fig. 5). Es kommt zur Reibung zumindest zwischen dem zweiten Bauelement 3 und dem Klemmkörper 8, wodurch der Klemmkörper 8 in Richtung des sich verjüngenden Abschnitts 7.1 gebracht und dabei zwischen dem ersten und zweiten Bauelement 2, 3 verkeilt wird. Sobald der Klemmkörper 8 den Keilpunkt 7.4 erreicht hat, kommt es zu einer Arretierung und eine ausreichend große Anpresskraft wirkt in radialer Richtung, wodurch das zweite Bauelement 3 an die Kontaktflächen 2.1, 2.2 des ersten Bauelements 2 gedrückt wird. Die Folge ist eine achsparallele Ausrichtung der zweiten Achse B des zweiten Bauelements 3 relativ zur ersten Achse A der unrunden Bohrung 4. Folglich wird das zweite Bauelement 3 in einem Arbeitsschritt achsparallel zur Achse A der unrunden Bohrung 4 ausgerichtet und gleichzeitig arretiert, ohne dass externe Haltemittel notwendig sind.

Ein Lösen der Klemmung wird erreicht, indem das zweite Bauelement 3 relativ zum ersten Bauelement 2 in die zweite Richtung R₂, d. h. entgegengesetzt der ersten Richtung R₁, gedreht wird (siehe Fig. 4). Der Klemmkörper 8 wird dabei vom Keilpunkt 7.4 in Richtung des weiteren Abschnitts 7.3 bewegt, wodurch die Klemmung aufgehoben wird.

Soll eine dauerhafte achsparallele Verbindung zwischen dem ersten und zweiten Bauelement 2, 3 ausgebildet werden, wird vor dem Zusammenstecken des ersten und zweiten Bauelements 2, 3 ein Stoffschlussmittel 6, beispielsweise ein Klebstoff, aufgetragen. Als geeignete Flächen bieten sich die Wandflächen der unrunden Bohrung 4 und ergänzend oder alternativ die äußere Mantelfläche des zweiten Bauelements 3 an. Nach dem arretierten und achsparallelen Fügen beider Bauelemente 2, 3 kann das Stoffschlussmittel dann vollständig aushärten, ohne dass externe Haltemittel nötig sind.

## Patentansprüche

1. Messtaster (1) umfassend ein erstes Bauelement (2) und ein zweites als Hohlwelle zur Führung eines Messbolzens ausgebildetes Bauelement (3),
wobei das erste Bauelement (2) eine unrunde Bohrung (4) mit einer ersten Achse (A) umfasst,
wobei das zweite Bauelement (3) zylindrisch ausgebildet ist und eine zweite Achse (B) aufweist, welche sich in die unrunde Bohrung (4) des ersten Bauelements (2) erstreckt,
wobei die unrunde Bohrung (4) derart ausgebildet ist, dass das zweite Bauelement (3) über wenigstens zwei Kontaktflächen (2.1, 2.2) des ersten Bauelements (2) innerhalb der unrunden Bohrung (4) achsparallel zur ersten Achse (A) der unrunden Bohrung (4) fügbar ist,
**dadurch gekennzeichnet,**
**dass** das erste Bauelement (2) innerhalb der unrunden Bohrung (4) eine Nut (7) aufweist, welche in einer Umfangsrichtung (U) der unrunden Bohrung (4) verläuft,
**dass** der Messtaster (1) wenigstens einen Klemmkörper (8) aufweist, welcher durch die Nut (7) aufnehmbar ist, und
**dass** durch eine Rotation des zweiten Bauelements (3) relativ zum ersten Bauelement (2) mit Hilfe des durch die Nut (7) aufgenommenen Klemmkörpers (8) eine lösbare Fixierung des zweiten Bauelements (3) zumindest an den Kontaktflächen (2.1, 2.2) des ersten Bauelements (2) bewirkt wird und die zweite Achse (B) des zweiten Bauelements (3) parallel zur ersten Achse (A) der unrunden Bohrung (4) ausgerichtet wird.

2. Messtaster (1) nach Anspruch 1, wobei die Nut (7) zumindest einen ersten Abschnitt (7.1), welcher sich in Umfangsrichtung (U) radial bezüglich der ersten Achse (A) verjüngt, und einen weiteren Abschnitt (7.3), welcher radial bezüglich der ersten Achse (A) geweitet ist, aufweist, sodass der Klemmkörper (8) gerade noch oder nicht in Eingriff mit dem ersten und zweiten Bauelement (2, 3) steht.

3. Messtaster (1) nach Anspruch 2, wobei der Klemmkörper (8) und die Nut (7) derart ausgebildet sind, dass der Klemmkörper (8) durch die Rotation des zweiten Bauelements (3) relativ zum ersten Bauelement (2) innerhalb der Nut (7) geführt wird, sodass durch die Rotation in einer ersten Richtung (R₁) durch den Klemmkörper (8) eine Klemmung zwischen dem ersten und zweiten Bauelement (2, 3) im ersten Abschnitt (7.1) hervorgerufen wird und durch die Rotation in einer der ersten Richtung (R₁) entgegengesetzten zweiten Richtung (R₂) die Klemmung gelöst wird, indem der Klemmkörper (8) vom ersten Abschnitt (7.1) in den weiteren Abschnitt (7.3) gebracht wird.

4. Messtaster (1) nach einem der vorherigen Ansprüche, wobei die Kontaktflächen (2.1, 2.2) derart ausgebildet sind, dass zwischen dem ersten und zweiten Bauelement (2, 3) wenigstens ein erster und zweiter Spalt (5.1, 5.2) ausgebildet werden, wobei die Spalte (5.1, 5.2) zur Aufnahme eines Mittels zum Ausbilden einer stoffschlüssigen Verbindung zwischen dem ersten und zweiten Bauelement (2, 3) ausgebildet sind.

5. Messtaster (1) nach einem der vorherigen Ansprüche, wobei sich die Kontaktflächen (2.1, 2.2) in axialer Richtung entlang der gesamten Tiefe der unrunden Bohrung (4) erstrecken.

6. Messtaster (1) nach einem der vorherigen Ansprüche, wobei der Querschnitt der unrunden Bohrung (4) spiegelsymmetrisch ausgebildet ist, wobei die Kontaktflächen (2.1, 2.2) jeweils in Form eines Sekantenabschnitts ausgebildet sind und der Querschnitt der unrunden Bohrung (4) sonst als Kontur mit einem konstanten Radius bezüglich der ersten Achse (A) verläuft.

7. Messtaster (1) nach einem der vorherigen Ansprüche, wobei ein Überlappungsbereich (9) des ersten und zweiten Bauelements (2, 3) innerhalb der unrunden Bohrung (4) in axialer Richtung kleiner als der zweieinhalbfache oder einfache Durchmesser des zweiten Bauelements (3) ist.

8. Messtaster (1) nach einem der vorherigen Ansprüche, wobei der Klemmkörper (8) ein Kreiskeil oder ein Rotationskörper, insbesondere in Form einer Kugel oder eines Zylinders, ist.

9. Messtaster (1) nach einem der vorherigen Ansprüche, wobei die Nut (7) und die Kontaktflächen (2.1, 2.2) derart angeordnet sind, dass diese sich innerhalb der unrunden Bohrung (4) in radialer Richtung bezüglich der ersten Achse (A) gegenüber liegen.

10. Messtaster (1) nach einem der vorhergehenden Ansprüche, wobei die Kontaktflächen (2.1, 2.2) jeweils einen betragsmäßigen Winkelabstand von 110° bis 140° zum ersten Abschnitt (7.1) aufweisen.

11. Messtaster (1) nach Anspruch 10, wobei der erste Abschnitt (7.1) und die Kontaktflächen (2.1, 2.2) jeweils einen betragsmäßigen Winkelabstand von 120° zueinander aufweisen.

## Claims

1. Measuring probe (1) comprising a first structural element (2) and a second structural element (3), the latter being in the form of a hollow shaft for guiding a measuring pin,
wherein the first structural element (2) comprises a non-round bore (4) with a first axis (A),
wherein the second structural element (3) is of cylindrical form and has a second axis (B) which extends into the non-round bore (4) of the first structural element (2),
wherein the non-round bore (4) is formed in such a way that the second structural element (3) is able to be joined via at least two contact surfaces (2.1, 2.2) of the first structural element (2) within the non-round bore (4) in an axially parallel manner in relation to the first axis (A) of the non-round bore (4),
**characterized**
**in that** the first structural element (2) has within the non-round bore (4) a groove (7) which extends in a circumferential direction (U) of the non-round bore (4), in that the measuring probe (1) has at least one clamping body (8) which is able to be accommodated by the groove (7), and
**in that**, by rotation of the second structural element (3) relative to the first structural element (2), with the aid of the clamping body (8) accommodated by the groove (7), a releasable fixing of the second structural element (3) at least at the contact surfaces (2.1, 2.2) of the first structural element (2) is effected and the second axis (B) of the second structural element (3) is oriented parallel to the first axis (A) of the non-round bore (4).

2. Measuring probe (1) according to Claim 1, wherein the groove (7) has at least a first portion (7.1), which narrows radially in the circumferential direction (U) with respect to the first axis (A), and a further portion (7.3), which widens radially with respect to the first axis (A) so that the clamping body (8) is just still or is not in engagement with the first and second structural elements (2, 3).

3. Measuring probe (1) according to Claim 2, wherein the clamping body (8) and the groove (7) are formed in such a way that the clamping body (8) is guided within the groove (7) by the rotation of the second structural element (3) relative to the first structural element (2), so that rotation in a first direction (R₁) gives rise to clamping between the first and second structural elements (2, 3) in the first portion (7.1) due to the clamping body (8) and rotation in a second direction (R₂), which is opposite to the first direction (R₁), releases the clamping in that the clamping body (8) is brought from the first portion (7.1) into the further portion (7.3).

4. Measuring probe (1) according to one of the preceding claims, wherein the contact surfaces (2.1, 2.2) are formed in such a way that, between the first and second structural elements (2, 3), at least a first and second gap (5.1, 5.2) are formed, wherein the gaps (5.1, 5.2) are configured to accommodate an agent for forming a materially bonded connection between the first and second structural elements (2, 3).

5. Measuring probe (1) according to one of the preceding claims, wherein the contact surfaces (2.1, 2.2) extend in the axial direction along the entire depth of the non-round bore (4).

6. Measuring probe (1) according to one of the preceding claims, wherein the cross section of the non-round bore (4) is of mirror-symmetrical form, wherein the contact surfaces (2.1, 2.2) are each in the form of a secant segment and the cross section of the non-round bore (4) is otherwise realized by a contour with a constant radius with respect to the first axis (A).

7. Measuring probe (1) according to one of the preceding claims, wherein an overlap region (9) of the first and second structural elements (2, 3) within the non-round bore (4) in the axial direction is smaller than two and a half times the diameter or the diameter of the second structural element (3).

8. Measuring probe (1) according to one of the preceding claims, wherein the clamping body (8) is a circular wedge or a body of rotation, in particular in the form of a sphere or a cylinder.

9. Measuring probe (1) according to one of the preceding claims, wherein the groove (7) and the contact surfaces (2.1, 2.2) are arranged in such a way as to be situated opposite one another radially with respect to the first axis (A) within the non-round bore (4).

10. Measuring probe (1) according to one of the preceding claims, wherein the contact surfaces (2.1, 2.2) each have an angular spacing to the first portion (7.1) of 110° to 140° in terms of magnitude.

11. Measuring probe (1) according to Claim 10, wherein the first portion (7.1) and the contact surfaces (2.1, 2.2) each have an angular spacing to one another of 120° in terms of magnitude.

## Revendications

1. Palpeur de mesure (1), comprenant un premier composant (2) et un deuxième composant (3) réalisé sous la forme d'un arbre creux pour guider une tige de mesure,
le premier composant (2) comprenant un alésage non circulaire (4) ayant un premier axe (A),
le deuxième composant (3) étant réalisé de manière cylindrique et présentant un deuxième axe (B) qui s'étend dans l'alésage non circulaire (4) du premier composant (2),
dans lequel l'alésage non circulaire (4) est réalisé de telle sorte que le deuxième composant (3) peut être joint par l'intermédiaire d'au moins deux surfaces de contact (2.1, 2.2) du premier composant (2) à l'intérieur de l'alésage non circulaire (4) en parallèle au premier axe (A) de l'alésage non circulaire (4),
**caractérisé**
**en ce que** le premier composant (2) présente à l'intérieur de l'alésage non circulaire (4) une rainure (7) qui s'étend dans une direction circonférentielle (U) de l'alésage non circulaire (4),
**en ce que** le palpeur de mesure (1) présente au moins un corps de serrage (8) qui peut être reçu par la rainure (7), et
**en ce qu'**une rotation du deuxième composant (3) par rapport au premier composant (2) provoque à l'aide du corps de serrage (8) reçu dans la rainure (7) une fixation amovible du deuxième composant (3) au moins aux surfaces de contact (2.1, 2.2) du premier composant (2), et le deuxième axe (B) du deuxième composant (3) est aligné en parallèle au premier axe (A) de l'alésage non circulaire (4).

2. Palpeur de mesure (1) selon la revendication 1, dans lequel la rainure (7) présente au moins une première partie (7.1) qui s'amincit dans la direction circonférentielle (U) radialement par rapport au premier axe (A), et une autre partie (7.3) qui est élargie radialement par rapport au premier axe (A), de sorte que le corps de serrage (8) n'est plus que tout juste ou plus du tout en prise avec le premier et le deuxième composant (2, 3).

3. Palpeur de mesure (1) selon la revendication 2, dans lequel le corps de serrage (8) et la rainure (7) sont réalisés de telle sorte que le corps de serrage (8) est guidé à l'intérieur de la rainure (7) par la rotation du deuxième composant (3) par rapport au premier composant (2), de sorte que par la rotation dans un premier sens (R₁) le corps de serrage (8) provoque un serrage entre le premier et le deuxième composant (2, 3) dans la première partie (7.1), et la rotation dans un deuxième sens (R₂) opposé au premier sens (R₁) desserre le serrage en ce que le corps de serrage (8) est transféré de la première partie (7.1) à l'autre partie (7.3).

4. Palpeur de mesure (1) selon l'une quelconque des revendications précédentes, dans lequel les surfaces de contact (2.1, 2.2) sont réalisées de telle sorte qu'entre le premier et le deuxième composant (2, 3) au moins une première et une deuxième fente (5.1, 5.2) sont réalisées, les fentes (5.1, 5.2) étant réalisées pour recevoir un moyen pour réaliser un assemblage par liaison de matière entre le premier et le deuxième composant (2, 3).

5. Palpeur de mesure (1) selon l'une quelconque des revendications précédentes, dans lequel les surfaces de contact (2.1, 2.2) s'étendent dans la direction axiale sur toute la profondeur de l'alésage non circulaire (4).

6. Palpeur de mesure (1) selon l'une quelconque des revendications précédentes, dans lequel la section transversale de l'alésage non circulaire (4) est réalisée en symétrie spéculaire, les surfaces de contact (2.1, 2.2) étant respectivement réalisées sous la forme d'une section de sécante et la section transversale de l'alésage non circulaire (4) s'étendant par ailleurs sous la forme d'un contour ayant un rayon constant par rapport au premier axe (A).

7. Palpeur de mesure (1) selon l'une quelconque des revendications précédentes, dans lequel une zone de chevauchement (9) du premier et du deuxième composant (2, 3) à l'intérieur de l'alésage non circulaire (4) dans la direction axiale est inférieure à deux fois et demi ou une fois le diamètre du deuxième composant (3).

8. Palpeur de mesure (1) selon l'une quelconque des revendications précédentes, dans lequel le corps de serrage (8) est un coin circulaire ou un corps de révolution en particulier sous la forme d'une sphère ou d'un cylindre.

9. Palpeur de mesure (1) selon l'une quelconque des revendications précédentes, dans lequel la rainure (7) et les surfaces de contact (2.1, 2.2) sont disposées de telle sorte qu'elles se font face à l'intérieur de l'alésage non circulaire (4) dans la direction radiale par rapport au premier axe (A).

10. Palpeur de mesure (1) selon l'une quelconque des revendications précédentes, dans lequel les surfaces de contact (2.1, 2.2) présentent respectivement une valeur de distance angulaire de 110° à 140° par rapport à la première partie (7.1).

11. Palpeur de mesure (1) selon la revendication 10, dans lequel la première partie (7.1) et les surfaces de contact (2.1, 2.2) présentent respectivement une valeur de distance angulaire de 120° l'une par rapport à l'autre.
